# EUROPEAN PATENT APPLICATION

(11) **EP 4 517 333 A1**
(43) Date of publication of application: **05.03.2025**
(21) Application number: 23194948.8
(22) Date of filing: 01.09.2023
(51) Int. Cl.: G01N 35/10, B01L 3/02

(54) **DOSING TOOL AND DOSING SYSTEM FOR AUTOMATED LIQUID HANDLING**

(71) Applicant: Eppendorf SE, 22339 Hamburg (DE)
(72) Inventor: Flucke, Christian, 22339 Hamburg (DE); Radke, Maik, 22339 Hamburg (DE); Keeskes, Szaboles, 22339 Hamburg (DE)
(74) Representative: Høiberg P/S

(57) **Abstract**

Disclosed is a dosing tool and a dosing system comprising a plurality of dosing tools. The dosing tool is configured for aspirating or dispensing a sample. The dosing tool comprises a housing unit comprising a channel having a distal opening and a proximal opening, a piston having a distal section and a proximal section, wherein the piston is configured to slide inside the channel, a driver unit comprising a drive for rotating an output shaft, and an engagement unit driven by the output shaft. The engagement unit is engaged with at least a part of the proximal section of the piston for sliding the piston inside the channel when the output shaft rotates for aspirating or dispensing the sample and wherein the engagement unit is positioned on the output shaft.

## Description

The present dislosure relates to dosing tools and dosing systems for aspirating or dispensing a sample.

### Background

Automated liquid handling systems are also commonly known as dosing workstations which can perform transfer of sample volumes between various source and destination vessels. While pipetting can be performed by a variety of systems such as handheld manual pipettes or by means of automated liquid handling systems with dosing devices, choosing the right tool for pipetting is critical for optimal results.

Various industries require automated systems for the general movement of samples between source and destination vessels and a more precise pipetting system for aspirating and dispensing sample. For example, for pharmaceutical research and clinical diagnostics, there are several types of liquid handling systems used to move samples from one container to another. Generally, samples are manipulated on standardized micro-test plates (MTP). These plates come in a variety of formats, but typically comprise 96 wells, vessels, in an 8 by 12 grid. Plates at even multiples or fractions of densities are also used. Vessels are arranged in an equidistant rectangular pattern with a distance of 9 mm or 4.5 mm or 2.25mm. Such dimensions of micro-test plates and other well plates are set out in recognized standards, for example the ANSI SLAS 4-2004 (R2012), provided by the Society for Laboratory Automation and Screening (SLAS) Microplate Standard Advisory Committee as directed by the American National Standards Institute (ANSI).

The pipetting can be performed by means of dosing tools or dosing systems with a single pipetting channel. In some applications dosing tools and dosing systems with 8, 12 or up to 96 or more pipetting channels were used and are still in use, for example to address samples in a rectangular grid arrangement. This requires each pipetting channel to be designed with a narrower width to be operated in a row of the vessel array arrangement without collision. Furthermore, in general, all channels of the pipettes are driven by the same mechanism for the entire rows or columns. It is consequently not possible to aspirate or dispense different volumes for the individual samples in each well. There is therefore a need for providing a mechanically efficient and simple pipetting channel construction which can be used both in the case of single-channel pipettes and in particular in multi-channel pipettes.

Many dosing devices comprise a dosing tool with at least one piston-cylinder unit. By moving the piston, the sample is sucked in, also referred to as aspiration, or dispensed through a dosing opening. The sample is often received in disposable pipette tips, which have an opening at the bottom to receive and dispense samples and a plug-on opening at the top for detachable connection to the dosing tool. The pipette tips can come in various types and sizes depending on the type of pipette used and volume to be transferred. The two main types of pipettes are air displacement pipettes and positive displacement pipettes. The positive displacement pipette tips generally comprise at least two parts and can be costly to manufacture and assemble. Yet, the positive displacement systems can handle a wide range of sample viscosity, volatility and density. While the air displacement pipettes can be cheaper to produce, a challenge can be handling of samples. The principle of the air displacement pipetting is having an air cushion as separating medium between the piston and sample. The air cushion should be dimensioned sufficiently large for preventing contamination but as small as possible because it can influence dosing accuracy and precision significantly. It can therefore be a cumbersome procedure to replace the pipette tips and/or dosing systems based on the sample requirements, such as sample volume range.

Additionally, the need in the art extends to providing a multi-dosing pipette for transfer of samples for a wide range of volumes. For sample preparation with automated liquid handlers, e.g. preparation for DNA sequencing, volumes of a liquid range typically from 0.5 to 1250 µl. In the lower volume range (0.5 - 5 µl) many automated liquid handler pipettes only work in liquid contact mode and are not capable of accurate contactless free jet dispensing. The state-of-the art liquid handler optimized for free-jetting small volumes cannot operate in a large volume range. Large and small volume pipetting as well as drive dynamics and resolution are contradicting pairs of requirements when also utmost accuracy and precision are demanded for pipetting quality. Other ranges could likely be envisioned without changing the understanding and teaching in the current disclosure.

### Summary

The present approach alleviates the above-mentioned drawbacks and provides improved resolution and dynamics with accuracy and precision during pipetting with a large volume range. Furthermore, there is disclosed a system where each channel can be controlled individually enabling even further customizable liquid handling workflows and processes.

The present disclosure relates in a first aspect to a dosing tool for aspirating or dispensing a sample, comprising:
- a housing unit comprising a channel having a distal opening and a proximal opening,
- a piston having a distal section and a proximal section, wherein the piston is configured to slide inside the channel,
- a driver unit comprising a drive for rotating an output shaft,
- an engagement unit driven by the output shaft, wherein the engagement unit is engaged with at least a part of the proximal section of the piston for sliding the piston inside the channel when the output shaft rotates for aspirating or dispensing the sample.

The dosing tool comprises a piston which is movable axially inside a channel, such as inside a tubular cylinder. The driver unit drives the piston by means of the engagement unit which directly acts on the piston. The construction as disclosed herein therefore requires only a few elements between the piston and the drive of the driver unit. Thus, the compactness of the dosing tool is improved.

The driver unit comprises a drive, such as a motor, and an output shaft. The drive converts the electrical energy to rotational energy, through rotational movement of the output shaft. The rotational energy of the output shaft is transmitted to the piston by means of the engagement unit acting between the piston and the driver unit. The engagement unit can also be referred to as a part of drive chain, a chain comprising one or more elements for transmitting the rotational movement of the driver unit to a linear motion of the piston. At least a part of the engagement unit, such as one element of the engagement unit can be coupled directly with the output shaft and the piston. Thus, the piston can also be perceived as a part of the drive chain. Accordingly, the driving action affects the piston in a more direct manner. Thus, the present approach offers a simple and compact design with a reduced number of intermediate parts, thereby reducing the complexity of a dosing tool and reducing otherwise required production costs.

A further advantage of the disclosed dosing tool is improved dynamics. It has been realized that the proposed compactness of the design enhances the inertial mass of the moving components. The disclosed engagement unit can act directly on the drive unit and can drive the piston, accordingly, the proposed approach can eliminate other kinds of transmission drives and connecting parts. As a result, the mass of the moving parts and consequently the inertia thereby contribute to the optimization of the resistance of the piston against movement.

Furthermore, the present disclosure can offer a solution for addressing a wide range of pipettable volumes. The presently disclosed dosing tool can be configured such that a wide range of sample volume can be accommodated. Moreover, the spatial resolution of the piston can be critical to displace samples in volume increments, for example in the range of sub-µl. Accordingly, the piston can be configured to accommodate large volume ranges of samples and/or large volume ranges of aspiration and/or dispensing. For example, the length of the piston can be increased to have a larger sample volume, and/or the diameter of the piston can be decreased to improve the resolution. By providing a drive chain acting on the piston, a more compact design of the piston can be provided without compromising the stroke required for dosing. In other words, in order to reach longer stroke length for dosing larger volume of sample, it may be required to have longer piston design. The present disclosure provides an engagement unit acting on the piston such that the piston is part of the drive chain, thereby providing a compact design which can dose a large volume range of sample without compromising the compactness, accuracy and precision of the dosing tool. Consequently, the stroke range of the piston can be larger for a shorter length of the piston when the piston is driven directly instead of driving the piston from above.

Advantageously, due to the improvements in dynamics and resolution, the disclosed dosing tool can work both in contact mode and in contactless free jet mode for dispensing the sample.

The present disclosure relates in a second aspect to a dosing system, comprising a plurality of dosing tools for receiving a plurality of pipette tips for aspirating or dispensing the sample, wherein the plurality of dosing tools is parallel next to one another.

Advantageously, the space saved by the presented approach enables providing a dosing system comprising a plurality of dosing tools for multi-channel pipetting. The piston of each dosing tool can be driven by a separate driver unit. Accordingly, the individual dosing tool can be configured to receive a variety of pipette tips for aspirating and/or dispensing sample. Thus, it is possible to handle a variety of samples and volume ranges simultaneously by the individual dosing tools of the plurality of dosing tools.

### Description of the drawings

The invention will in the following be described in greater detail with reference to the accompanying drawings:
Fig. 1 shows one embodiment of a dosing system comprising a dosing tool as disclosed herein, and
Fig. 2a and 2b shows another embodiment of a dosing system comprising a dosing tool as described herein.

### Detailed description

As used herein, samples refer to fluids, being mostly but not limited to liquids, which can be the actual sample processed, aliquots of samples but also any type of reagent, supernatant etc. which is dosed during automated sample processing.

In general, by exchanging the pipette tip and/or working mode of the dosing tool, it is possible to carry out different dosing tasks. A great advantage of the present disclosure is that it is possible to handle a variety of samples and a variety of dosing volumes with an improved control over dosing accuracy and precision. The presently disclosed dosing tool can be configured to work by an air displacement principle and/or by positive displacement principle.

The presently disclosed dosing tool comprises a piston having a proximal section and a distal section. The dosing tool further comprises a housing unit with a channel having a proximal opening and distal opening. The piston is configured to slide inside the channel of the housing unit. In an embodiment, the housing unit can be a cylinder surrounding the piston in a fluid tight manner. The cylinder can be a stainless steel pipe.

The dosing tool further comprises a driver unit with a drive and an output shaft. The drive can be an electronic drive and the engagement unit may be a mechanical engagement unit, e.g. a cog wheel, friction wheel or a worm gear wheel.

### Engagement unit

The dosing tool further comprises an engagement unit driven by the output shaft.

The engagement unit as used herein can be part of a drive chain. The drive chain can comprise one or more elements configured to transmit power between components. The drive chain can be a transmission unit transmitting rotational movement of the driver unit to the piston such that the sample can be aspirated and/or dispensed.

The engagement unit engages with at least a part of the proximal section of the piston for sliding the piston inside the channel when the motor rotates such that the sample can be aspirated and/or dispensed by the movement of the piston. In an embodiment, the engagement unit is positioned on the output shaft. Thus, the engagement unit can act directly on the output shaft.

In an embodiment, the engagement unit is a wheel, such as a cog wheel or a friction wheel or a worm gear wheel.

### Cog wheel

In an embodiment, the engagement unit is a cog wheel provided on the output shaft. In a further embodiment, the piston comprises a cog rail for engaging with the engagement unit. In a further embodiment, the cog rail is machined on at least a part of the proximal section of the piston. The dosing tool can accordingly be configured such that when the output shaft rotates, the cog wheel can also rotate and transfer the rotational movement to a linear movement of the cog rail, thus the piston. In an embodiment, the engagement unit is a cog wheel interfering with the cog rail such that the rotational movement of the cog wheel is transmitted to linear movement of the piston. The engagement unit can comprise a cog wheel and a cog rail engaging with the piston wherein the cog wheel interferes with the cog rail such that the rotational movement of the cog wheel is transmitted to linear movement of the piston.

### Gear wheel

In an embodiment, the engagement unit is a worm gear engaging with an output shaft of the driver unit and configured to move the piston linearly. The drive chain can comprise a worm gear driven by an electronic motor. The drive chain can further comprise a gear wheel and a nut element.

The gear wheel can interact with the worm gear, e.g. by toothing where the teeth of the gear wheel engages the spiral tooth of the worm gear. The nut element can be screwed on the piston on the proximal end of the piston which is threaded. The rotation of the motor can be transmitted via the output shaft to the worm gear and the worm gear can drive the nut element via the gear wheel.

The drive chain can further comprise a bearing configured for restricting degrees of freedom to only rotation of the nut element and the gear wheel assembly. The drive chain comprises an assembly unit configured for restricting rotation but allowing for translational movement of the piston. The piston can slide up and down within the cylinder, however cannot turn around its longitudinal axis.

### Friction wheel

In an embodiment, the engagement unit can be a friction wheel configured to contact with the piston such that the piston moves linearly in an extending direction by means of the friction between contacting surfaces of the friction wheel and the piston.

The friction wheel can engage with the surface of the piston such that rotational motion of the friction wheel can move the piston linearly, while the drive force is transferred by static friction force of the line contact between the friction wheel and friction surface on the piston. To remain in the domain of static friction preventing slippage, the friction wheel may have a rubber contact surface. The friction wheel can contact with a piston having hardened stainless steel friction surface.

An important aspect of the present disclosure is that the piston can be a part of the drive chain. A first element, such as a cog wheel or friction wheel, engaging with the output shaft of the drive can directly act on the piston surface, such as a cog rail, and move the piston. This implies that there may be a single element between the driver unit and the piston. Advantageously, a compact dosing tool can be provided. The presently disclosed dosing tool can take up less space while providing a larger volume range pipetting and/or dosing.

The presently disclosed dosing tool can comprise a counterpart of the engagement unit. The counterpart of the engagement unit can be any unit with which the engagement unit interacts. The counterpart of the engagement unit may for example be a cog rail. Thus, the counterpart can be a part of the drive chain.

The presently disclosed approach provides an array of components in one lateral dimension, e.g., horizontal direction, that is very slim and with reduced number of drive chain parts, allowing an arrangement of several dosing tools in a narrower array. The construction can also be compact in vertical dimension, as the driver unit directly affects the piston, and other assemblies. With the proposed approach, assemblies and parts used between driver unit and the piston can be omitted. These assemblies and parts can be a lead screw assembly, lead screw coupling, lead screw and nut assembly, lead screw bearings, dedicated housing, nut and piston connector.

In an embodiment, the dosing tool does not comprise one or more of the following: a lead screw assembly, lead screw coupling, lead screw and nut assembly, lead screw bearings, dedicated housing, nut and piston connector.

### Dosing tool

In an embodiment, the dosing tool comprises a piston seal arranged between the proximal section and the distal section of the piston and configured to provide an air-tight seal between the piston and the housing unit, for example between the piston and the inner surface of the cylinder. The piston seal can be configured to slide within the channel of the housing unit, such as inside the cylinder, and guide the piston therein. Thus, the piston seal can serve different purposes.

In an embodiment the piston seal comprises a proximal section extending between the driver unit and the piston seal and a distal section extending from the piston seal away from the driver unit, e.g. in a direction opposite the proximal section. The distal section can for example extend between the piston seal and an air cushion, such as working volume when the dosing tool is in use.

Alternatively, the piston seal can be provided at the bottom end of the piston. The piston seal can seal the piston and the inner tube of the cylinders. Moreover, the piston seal can guide the piston within the channel of the housing unit, e.g., the cylinder.

In an embodiment, the channel of the housing unit comprises a cushion volume towards the distal opening, such as an air cushion, between the piston seal and the aspirated sample. Thus, the seal may be an air-tight seal such that the air towards the distal opening of the housing unit can be controlled to aspirate and dispense samples.

The air cushion volume may comprise a working volume for controlling the sample movement by means of the movement of the distal section of the piston within the air cushion volume. Control of the air cushion volume can be crucial for correct sample aspiration and dispensation. Because the air can expand and affect the dosing adversely.

In an embodiment, the dosing tool comprises a pressure sensor in communication with the air cushion. Air cushion pressure can be measured in order to use the pressure signal to monitor and/or control the aspiration and dispensing processes.

In an embodiment, the dosing tool comprises a connection element provided at the distal opening of the housing unit, wherein the connection element is configured to receive a pipette tip for aspirating or dispensing the sample. This implies that the connection element can have an inner channel, for accommodating an air cushion volume. The connection element can be an integral part of the distal opening of the housing unit. The connection element may be a cone-shaped tube provided at the distal opening of the housing unit. This implies that the cone-shaped tube can have a plug-on opening at the top for detachable connection to the dosing tool. With the plug-on opening, the cone-shaped tube can be attached to the dosing tool such that the inner channel of said tube and the dosing tool channel can align and such that said tube can be attached and detached to the dosing tool. The pipette tip can seal the outer surface of the connection element. Thus, the distal end of the piston can move within the inner channel of the connection element.

In an embodiment, the connection element comprises a stepped circumferential outer surface for receiving a pipette tip, configured such that the connection element receives pipette tips having different dimensions. The pipette tip can have an inner circumference of different sizes. Circumferential outer surface of the connection element can have a stepped structure such that said outer surface can have an outer diameter of different sizes. Thus, a variety of pipette tips having a variety of inner circumference dimensions can be received. Alternatively, in an embodiment, the pipette tip can comprise a collar attachable to the distal opening of the channel. The collar can have one-size that can be plugged to the distal opening of the channel. The dimensions of the rest of the pipette tip can vary.

In general dosing tools can be configured to aspirate a measured volume of sample and dispense the sample in pre-defined volumes to the well. An advantage of the present disclosure is that the resolution in small volume can be improved.

For example, the diameter of the piston can be below 0.5 mm. The piston can be a wire having a diameter between 0.1 mm and 5 mm. The piston diameter can be between 0.1 mm and 3.5 mm. The smaller diameter can enable a high resolution. Consequently, handling of small volume dosing can be enhanced.

Furthermore, the length of the piston, for example the length of the distal section of the piston can differ. Thus, a dosing can be provided, wherein the dosing tool can dose within a large range of volume. Advantageously, the presently disclosed dosing tool can be configured such that the sample volume can be between 0.5 µl and 1250 µl, preferably between 0.2 µl and 1250µl. Due to integration of the piston into the drive chain, the piston can be directly driven without the need of further piston connections. Thus, the stroke of the piston can be up above 30 mm, preferably above 60 mm, more preferably above 100 mm, more preferably above 200 mm. Advantageously, the proposed dosing tool can handle the sample volume of up to 1250 µl, by designing a dosing tool comprising a piston with proper relation between the length of the piston and the diameter of the piston. The length can be adapted based on the diameter, for example as explained above in case a high resolution is desired a small diameter is provided which results in a longer piston length. Furthermore, as discussed herein, in embodiments where it is desired that the drive is arranged far away from the working volume a long piston and a small diameter can allow for such design options.

In an embodiment, a ratio of diameter to the length of the piston is below 0.01. For example, the diameter may be 2.5 mm or less while the length is 255 mm or less.

In an embodiment, a ratio of diameter to the length of the piston is below 0.02. For example, the diameter may be 3 mm or less while the length is 180 mm or less.

In an embodiment, a ratio of diameter to the length of the piston is 0.04 or less. For example, the diameter may be 4 mm or less while the length is 100 mm or less.

Thus, the dosing tool, as disclosed herein, is well suited for and performs particularly well when handling a high range of volumes, e.g. from 0.2 µl up to 1250 µl, with a high resolution i.e. the ratio of diameter to the length of the piston is between (and including) 0.01 to 0.05, for example 0.02 or 0.04.

In one embodiment the piston can thus be dimensioned such that sliding the piston inside the channel allows for aspirating or dispensing 0.2 µl to 1250 µl of the sample. E.g. by using the dimensioned mentioned above.

Reduced number of elements can result in reduced number of elements moving with respect to each other. Thus, the movement can be controlled more efficiently for reduced number of the elements, and the hysteresis can be reduced.

In an embodiment, the dosing tool comprises one or more guide wheels, provided along the extending direction of the piston, and configured to guide the piston along a central longitudinal axis of the channel. In a further embodiment, the guide wheel is a ball bearing with a cylindrically-shaped outer groove configured to receive the piston laterally. The wheels can guide the piston frictionless along the middle axis of the cylinder.

In an embodiment, the dosing tool comprises a tensioning unit configured to bring the cog wheel and the cog rail into toothing, ie. where the cog wheel interact with the cog rail. The tensioning unit can be tensioning lever comprising a spring mechanism, which can engage with the drive including cog with a spring load force against the cog rail. The tensioning lever can also engage with the guide wheels and as a result, the piston can be pressed against one or more guide wheels, guiding the piston, and the indentation is engaged.

### Dosing system

The present disclosure further relates to a dosing system, comprising a plurality of dosing tools as described above. Each of the plurality of dosing tools receives a pipette tip for aspirating or dispensing the sample. The plurality of dosing tools can be parallel next to one another.

In an embodiment, the dosing system can be configured such that each one of the dosing tools moves individually relative to the sample. Advantageously, samples can be aspirated and/or dispensed at a plurality of heights relative to the well, or relative to possible samples in the wells.

In an embodiment, the dosing system further comprises a plurality of pipette tips, wherein each one of the pipette tips engages with a dosing tool. The pipette tips may differ from each other depending on the sample characteristics and/or dosing principle.

Furthermore, because the array of components in one lateral dimension can be so slim that the several pipettes can be arranged in a narrow array. The lateral distance between each pipette tips from the centre vertical line may be 9 mm or less, preferably 9 mm or 4.5 mm or 2.25mm.

### Detailed description of the drawings

### Example 1

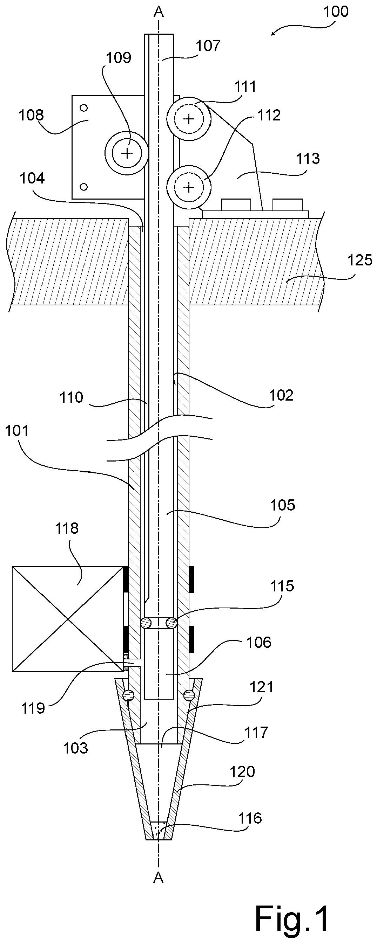

Fig. 1 shows an embodiment of a dosing system 100.

The dosing system comprises a dosing tool with a cylinder 101 having a channel 102 with a distal opening 103 and a proximal opening 104. The tubular cylinder 101 has a channel 102 with a diameter of between 3 mm to 4 mm.

The dosing system further comprises a piston 105 having a distal section 106 and a proximal section 107. The piston is movable axially inside the channel of the cylinder 1. The dosing system further comprises a drive 108 for driving the piston 105 at the proximal section 107. The dosing system further comprises an engagement unit driven by the drive 108 and engages with at least a part of the proximal section 107 of the piston 105 for sliding the piston inside the cylinder 101. In this specific embodiment, the drive 108 drives the piston 105 via a cog wheel 109. A cog rail 110 is machined into sidewall of the piston 105 and the cog wheel 109 engages with the cog rail 110. At the proximal section 107 of the piston 105 two wheels 111, 112 guide the piston along the middle axis A - A of the cylinder 101. A laterally adjustable holder 113 aligns the wheels 111, 112 and the cog wheel 109 to the middle axis A - A of the cylinder. The wheels 111, 112 can be a bearing with a groove in the outer ring and the piston 105 can engage with said groove laterally. A tensioning lever (not shown) swivels the drive 108 and the cog wheel 109 against the piston 105 such that the teeth of the cog wheel 109 and the cog rail 110 engages and interact with each other.

The drive chain of this embodiment therefore comprises the cog wheel 109 and the cog rail 110 machined on the piston 105. This implies that the piston 105 is a part of the drive chain.

The dosing tool further comprises a piston seal 115 between the cylinder 101 and the piston 105. The piston seal 115 is arranged between the proximal section 107 of the piston 105 and the distal section 106 of the piston 105. The piston seal 115 provides an air-tight seal between the piston 105 and the cylinder 101. The piston seal 115 acts also as a second guiding element for guiding the piston 105, within the cylinder 101. Functioning as a second guiding element the piston 105 can move without contact to the cylinder inner wall.

In air displacement pipettes a sample 116 is pulled in and pushed out through the use of displaced air. In the current embodiment air is trapped between the piston seal 115 and the sample 116 forming an air cushion 117. A part of the air cushion 117 which cannot be displaced can be referred as dead volume. A part of the air cushion 117 can be displaced to aspirate and dispense sample. The part of the air cushion 117 that is replaced to aspirate and dispense the sample is referred to as working volume. The dosing tool of this embodiment further comprises a pressure sensor 118 in communication with the air cushion 117. The pressure sensor communicates with the air cushion via a small bore 119. The signal of pressure sensor 118 is used for controlling and monitoring the dosing processes as the sensor 118 detects the air pressure variations in the air cushion above the sample 117 during the aspiration or dispensing processes.

The air cushion 117, i.e., the working volume and the dead volume, depends on many factors. For example, the length of the piston 105 and cylinder 101 can be increased to have a larger sample volume, i.e., the working volume. The piston length in this embodiment is between 100 to 200 mm with a dimeter of between 3 to 4 mm. The longer length of the piston allows for a larger working volume of the air cushion 117 because the stroke of the piston movement enables aspiration and dispensing of samples in larger volume.

Furthermore, the distal opening 103 of the cylinder 101 is arranged and designed such that a pipette tip 120 can be received. The distal opening 103 has a cone-shaped tip 121 for receiving and sealing the pipette tip 120. The cone-shaped tip 121 has the same inner diameter as the channel 102 of the cylinder 101 with reducing outer surface diameter towards the sample 116 thereby providing a chamfered outer shape of the distal opening 103 of the cylinder 101. The distal section 106 of the piston 105 can move within the cone-shaped tip 121 of the cylinder 101. Alternatively, a seat region of the pipette tip for being mounted on a mount of a dosing tool has the same inner circumference for all tip volumes/sizes. The mount of a dosing tool can be a fixture that can be mounted on the distal opening 103 of the cylinder 101.

The cylinder 101, the drive 108 and the adjustable holder are arranged on a frame 125. The frame may for example be part of a housing enclosing the dosing tool and/or it may provide coupling means for coupling the dosing tool to a carrier arm.

### Example 2

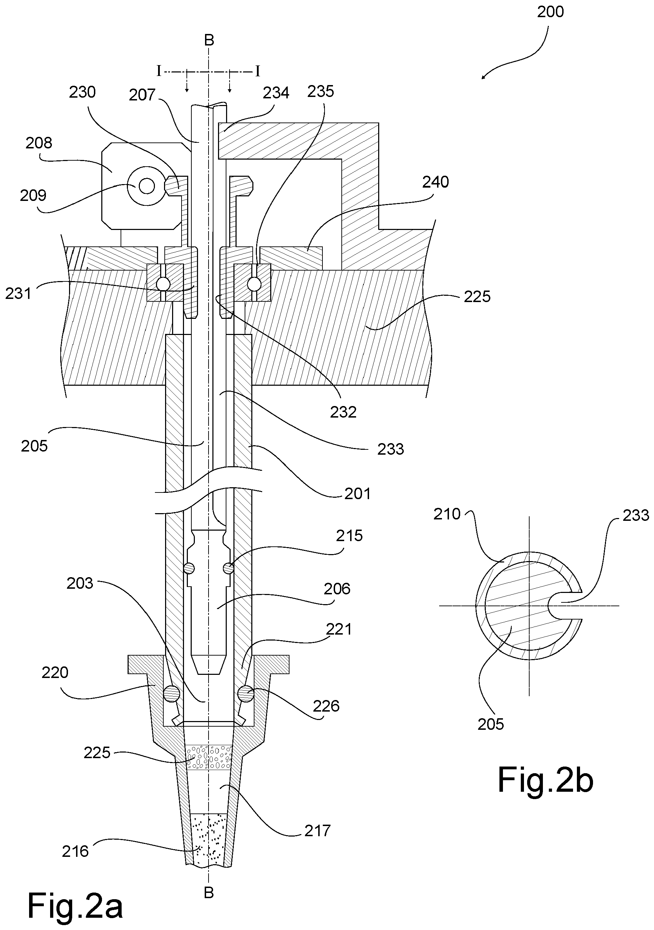

Fig. 2a shows another embodiment of a dosing system 200, where Fig. 2b shows in section the piston along I - I in Fig. 2a.

The drive chain of this embodiment comprises a worm gear 209 driven by an electronic motor 208. The drive chain further comprises a gear wheel 230 and a nut element 231. In the current embodiment the gear wheel 230 and the nut element 231 are provided as an integrated assembly. The gear wheel 230 interacts with the worm gear 209, i.e. the teeth of the gear wheel engage the teeth of the worm gear. The proximal end 207 of the piston 205 is at least partly provide with a threaded surface 210 which corresponds to, and thus is able to engage with, a corresponding inner threaded surface 232 on the nut element 231. The nut element 231 can thus be screwed on the piston 205 on the proximal end 207. The rotation is transmitted from motor 208 via shaft (not shown) to the worm gear 209. The worm gear 208 drives the nut element 231 via the integrated gear wheel 230. The rotation of the nut element 231 drives, via the corresponding cooperating threaded surfaces 210, 232, the piston 205 in a linear motion along the length B - B of the piston.

The piston 205 comprises a groove 233 extending along the length B - B of the piston. The groove 233 corporates with a corresponding tongue 234 to restrict rotation but allow for translational movement along piston axis (up/down) B - B. The groove 233 can also be seen from the cross section I - I of the piston 205 at the top of the Fig. 2a. The threaded piston 205 cannot turn around its longitudinal axis because the tongue 234 engages with the groove 233. The piston 205 can however slide up and down within the cylinder 201 along the longitudinal axis B - B.

The drive chain further comprises a bearing 235 restricting degrees of freedom to only rotation of the nut element 231 and the gear wheel 230 assembly.

The dosing system comprises a lid 240 which fixes the bearing 235 to a pipette frame 225. The pipette frame 225 can for example be a part of the dosing system or dosing tool and comprises coupling elements for coupling to a carrier arm that moves around within a liquid handling device.

Furthermore, a sealing 215 between the piston 205 and cylinder 201 is provided defining the proximal end 207 and the distal end 206 of the piston 205. On the distal side of the sealing 215, the piston 205 engages with the air cushion volume 217. The cylinder 201 comprises an attachment geometry 221 at its distal end 203 for receiving a pipette tip 220. The attachment geometry 221 is an integral part of the cylinder 201, such that the cylinder 201 has a conical surface wherein the pipette tip 220 is received. The pipette tip comprises a filter 225. Between the pipette tip 220 and the attachment geometry 221 a sealing O-ring 226 is provided.

Thus, when the rotation of the motor 208 is transmitted to the worm gear 209, the worm gear drives the gear wheel 230, such that the nut element 231 rotates. Turning the nut element 231 moves the piston 205 up or down along the axis B - B dependent on rotation direction of the electric motor 208, thereby the sample 216 can be aspirated or dispensed.

### Reference numbers

### Example 1

dosing system 100
cylinder 101
channel102
distal opening 103 of the cylinder 101
proximal opening 104 of the cylinder 101
piston 105
distal section 106 of the piston 105
proximal section 107 of the piston 105.
drive 108
cog wheel 109
cog rail 110
two wheels 111, 112
laterally adjustable holder 113
piston seal 115
sample 116
air cushion 117
pressure sensor 118
small bore 119
pipette tip 120
cone-shaped tip 121
frame 125

### Example 2

dosing system 200
worm gear 209
electronic motor 208
gear wheel 230
nut element 231
piston 205
proximal end 207 of the piston 205
distal end 206 of the piston 205
threaded surface 210
inner threaded surface 232
groove 233
tongue 234
cylinder 201
bearing 235
lid 240
pipette frame 225
sealing 215.
air cushion volume 217
distal end 203 of cylinder 201
pipette tip 220
filter 225
sealing O-ring 226
sample 216

### Embodiments

1. A dosing tool for aspirating or dispensing a sample, comprising:
   - a housing unit comprising a channel having a distal opening and a proximal opening,
   - a piston having a distal section and a proximal section, wherein the piston is configured to slide inside the channel,
   - a driver unit comprising a drive for rotating an output shaft,
   - an engagement unit driven by the output shaft, wherein the engagement unit is engaged with at least a part of the proximal section of the piston for sliding the piston inside the channel when the output shaft rotates for aspirating or dispensing the sample and wherein the engagement unit is positioned on the output shaft.
2. The dosing tool according to claim 1, wherein the engagement unit is a wheel, such as a cog wheel or a friction wheel or a worm gear wheel.
3. The dosing tool according to any of the preceding claims, wherein piston comprises a cog rail for engaging with the engagement unit.
4. The dosing tool according to claim 3, wherein the cog rail is machined on at least a part of the proximal section of the piston.
5. The dosing tool according to any one of claims 3-4, wherein the engagement unit is a cog wheel and interferes with the cog rail such that the rotational movement of the cog wheel is transmitted to linear movement of the piston.
6. The dosing tool according to claim 5, further comprising a tensioning unit configured to bring the cog wheel and the cog rail into tooting.
7. The dosing tool according to any of the preceding claims 1 or 2, wherein the engagement unit is a friction wheel configured to contact with the piston such that the piston moves linearly in an extending direction by means of the friction between contacting surfaces of the friction wheel and the piston.
8. The dosing tool according to claims 1 or 2, wherein the engagement unit is a worm gear engaging with an output shaft of the driver unit and configured to move the piston linearly.
9. The dosing tool according to any of the preceding claims, wherein the housing unit is a cylinder for surrounding the piston in a fluid tight manner.
10. The dosing tool according to any of the preceding claims, further comprising a piston seal arranged between the proximal section and the distal section of the piston and configured to provide an air-tight seal between the piston and the housing unit.
11. The dosing tool according to claim 10, wherein the channel of the housing unit towards the distal opening comprises a cushion volume, such as an air cushion between the piston seal and an aspirated sample.
12. The dosing tool according to claim 11, further comprising a pressure sensor in communication with the air cushion.
13. The dosing tool according to any of the preceding claims, wherein the dosing tool comprises a connection element provided at the distal opening of the housing unit, wherein the connection element is configured to receive a pipette tip for aspirating or dispensing the sample.
14. The dosing tool according to claim 13, wherein the connection element is an integral part of the distal opening of the housing unit.
15. The dosing tool according to claims 13-14, wherein the connection element comprises a stepped circumferential outer surface for receiving a pipette tip, configured such that the connection element receives pipette tips having different dimensions.
16. The dosing tool according to any of the preceding claims, further comprising one or more guide wheels, provided along the extending direction of the piston, and configured to guide the piston along a central longitudinal axis of the channel.
17. The dosing tool according to claim 16, wherein the guide wheel is a ball bearing with a cylindrically-shaped outer groove configured to receive the piston laterally.
18. The dosing tool according to any one of the claims 1 - 17, wherein the ratio of diameter to the length of the piston is between (and including) 0.01 to 0.05, for example 0.02 or 0.04.
19. The dosing too according to claim 18, wherein the piston is dimensioned such that sliding the piston inside the channel allows for aspirating or dispensing 0.2 µl to 1250 µl of the sample.
20. A dosing system, comprising a plurality of dosing tools according to claims 1 - 19 for receiving a plurality of pipette tips for aspirating or dispensing the sample, wherein the plurality of dosing tools are parallel next to one another.
21. The dosing system according to claim 20, configured such that each one of the dosing tools moves individually relative to the sample.
22. The dosing system according to any one of claim 20 -22 further comprising a plurality of pipette tips, wherein each one of the pipette tips engages with a dosing tool.

## Claims

1. A dosing tool (100; 200) for aspirating or dispensing a sample (116; 216), comprising:
- a housing unit (101; 201) comprising a channel (102) having a distal opening (103) and a proximal opening (104),
- a piston (105; 205) having a distal section (106; 206) and a proximal section (107; 207, wherein the piston (105; 205) is configured to slide inside the channel (102),
- a driver unit comprising a drive (108; 208) for rotating an output shaft,
- an engagement unit (109; 209) driven by the output shaft, wherein the engagement unit (109; 209) is engaged with at least a part of the proximal section (107; 207) of the piston (105; 205) for sliding the piston (105; 205) inside the channel (102) when the output shaft rotates for aspirating or dispensing the sample (116; 216) and wherein the engagement unit (109; 209) is positioned on the output shaft.

2. The dosing tool (100; 200) according to claim 1, wherein the engagement unit (109; 209) is a wheel, such as a cog wheel (109) or a friction wheel or a worm gear wheel (209).

3. The dosing tool (100; 200) according to any of the preceding claims, wherein piston (105) comprises a cog rail (110) for engaging with the engagement unit (109).

4. The dosing tool according to any of the preceding claims 1 or 2, wherein the engagement unit is a friction wheel configured to contact with the piston such that the piston moves linearly in an extending direction by means of the friction between contacting surfaces of the friction wheel and the piston.

5. The dosing tool (200) according to claims 1 or 2, wherein the engagement unit is a worm gear (209) engaging with an output shaft of the driver unit (208) and configured to move the piston (205) linearly.

6. The dosing tool (100; 200) according to any of the preceding claims, wherein the housing unit is a cylinder (101; 201) for surrounding the piston (105; 205) in a fluid tight manner.

7. The dosing tool (100; 200) according to any of the preceding claims, further comprising a piston seal (115; 215) arranged between the proximal section (107; 207) and the distal section (106; 206) of the piston (105; 205) and configured to provide an air-tight seal between the piston (105; 205) and the housing unit (101; 201).

8. The dosing tool (100; 200) according to claim 7, wherein the channel (102) of the housing unit (101; 201) towards the distal opening (103; 203) comprises a cushion volume, such as an air cushion (117; 217) between the piston seal (115; 215) and an aspirated sample (116; 216).

9. The dosing tool (100) according to claim 8, further comprising a pressure sensor (118) in communication with the air cushion (117).

10. The dosing tool (100; 200) according to any of the preceding claims, wherein the dosing tool (100; 200) comprises a connection element (121; 221) provided at the distal opening (103; 203) of the housing unit (101; 201), wherein the connection element (121; 221) is configured to receive a pipette tip (120; 220) for aspirating or dispensing the sample (116; 216).

11. The dosing tool (100; 200) according to any one of the claims 1 - 10, wherein the ratio of diameter to the length of the piston is between (and including) 0.01 to 0.05, for example 0.02 or 0.04.

12. The dosing tool (100; 200) according to claim 11, wherein the piston is dimensioned such that sliding the piston inside the channel allows for aspirating or dispensing 0.2 µl to 1250 µl of the sample.

13. A dosing system, comprising a plurality of dosing tools (100; 200) according to claims 1 - 12 for receiving a plurality of pipette tips (120; 220) for aspirating or dispensing the sample (116; 216), wherein the plurality of dosing tools (100; 200) are parallel next to one another.

14. The dosing system according to claim 13, configured such that each one of the dosing tools (100; 200) moves individually relative to the sample (116; 216).
